# EUROPÄISCHE PATENTANMELDUNG

(11) **EP 2 279 783 A1**
(43) Veröffentlichungstag der Anmeldung: **02.02.2011**
(21) Anmeldenummer: 10009203.0
(22) Anmeldetag: 08.12.2001
(51) Int. Cl.: B01D 39/08, B01D 39/16

(54) **Mehrlagiges Verbundfiltermedium zur Serienfiltration**

(62) Teilanmeldung aus: 01129171.3
(71) Anmelder: IBS Filtran Kunststoff-/Metallerzeugnisse GmbH, 51597 Morsbach (DE)
(72) Erfinder: Beer, Markus, 51597 Morsbach (DE); Rosendahl, Marco, 51597 Morsbach (DE); Stausberg, Wolfgang, 51597 Morsbach (DE)
(74) Vertreter: Polypatent

(57) **Zusammenfassung**

Die Erfindung betrifft ein mehrlagiges Verbundfiltermedium zur Serienfiltration mit einer Anströmseite und einer Abströmseite bezüglich eines zu filternden Mediums, wobei das Filtermedium mindestens zwei Filterlagen aus gleichen oder verschiedenen Filtermedien umfasst und die Filterlagen über die gesamte Oberfläche an definierten Punkten und/oder Flächen miteinander verschweißt sind und mindestens ein Filtermedium auf der Anströmseite und mindestens ein Filtermedium auf der Abströmseite angeordnet ist.

Weitere Gegenstände der Erfindung sind ein Verfahren zur Herstellung des Verbundfiltermediums, die Verwendung des Verbundfiltermediums und ein Filter enthaltend das erfindungsgemäße Verbundfiltermedium.

## Beschreibung

Gegenstand der Erfindung ist ein mehrlagiges Verbundfiltermedium zur Serienfiltration mit einer Anströmseite und einer Abströmseite bezüglich eines zu filternden Mediums. Verbundfiltermedien können als Filtermedien in Motorölfiltern, Getriebeölfiltern, Kraftstofffiltern oder Luftfiltern eingesetzt werden, wobei der Einsatz in Getriebeölfiltern bevorzugt ist.

Im Stand der Technik werden heute für die Filtrierung von Getriebeöl und auch Motoröl überwiegend Filter eingesetzt, die aus einteilig aufgebauten Filtervliesen bestehen. Hierbei handelt es sich meist um sogenannte Faservliese, die ungewebt sind und Glas, Cellulose oder synthetische Fasern sowie auch Metallfasern enthalten können. Mit diesen Filtermedien werden Verunreinigungen einer Größe ab >60 µm effektiv aus der zu filtrierenden Flüssigkeit entfernt. Kleinere Teilchen können jedoch mit diesem Material meist nicht ausreichend gefiltert werden.

Durch die Entwicklung neuerer Motor- und Getriebegenerationen, insbesondere stufenloser CVT-Getriebe ist es notwendig geworden, Filtermaterialien und Filter zu schaffen, die eine höhere Reinheit des Getriebeöls garantieren. Dies hängt damit zusammen, dass beispielsweise in den CVT-Getrieben die hydraulische Regelung elektronisch oder auch druckabhängig erfolgt und somit kleinste Verunreinigungen bereits Irritationen bei der Getriebesteuerung erzeugen können. Die zum Betrieb derartiger Getriebe notwendigen Ölreinheitsklassen können momentan nur durch Zuschaltung eines zusätzlichen Druckölfilters erreicht werden. Auch Anwendungen zur Erhöhung der Reinheit von Motoröl sind möglich.

Zukünftig soll das gesamte Schmutzpartikelspektrum in einem Filter durch Saugölfiltration filtriert werden können, wobei allein mit diesem Schritt die notwendige Ölreinheitsklasse erzielt werden soll. Um dies zu gewährleisten ist es daher dringend erforderlich, Filtermaterialien zu schaffen, die bezüglich ihrer Rückhaltung von Verunreinigungen effizienter sind und auch Verunreinigungen geringerer Größe zurückhalten können. Hierzu müssen die Eigenschaften der Filtermedien insbesondere in Hinsicht auf Druckverlust bei der Filtration, Filtrationseffizienz und Schmutzaufnahmevermögen verbessert werden.

Zur Lösung der Problematik ist es aus dem Stand der Technik bereits bekannt, mehrschichtige Filtermaterialien einzusetzen. Man strebt mit diesen mehrschichtigen Filtermaterialien eine sogenannte Serienfiltration an, bei der zunächst die groben Partikel über ein oder mehrere Filtermedien abgeschieden werden und die feinen Partikel anschließend über ein oder mehrere andere Filtermedien abgeschieden werden. Derartige Verbundfilter werden derzeit bereits in Getrieben, insbesondere auf dem amerikanischen Markt eingesetzt. Es handelt sich hierbei um Verbundfiltermedien, die aus einem Filtervlies und einem Filtergewebematerial bestehen, die mittels eines Klebers thermisch verbunden werden. Als Kleber werden häufig offen gewebte Polyesterkleber verwendet, die in Form von grobmaschigen Netzen mit unregelmäßig verteilten Maschen zwischen Filtervlies und Filtergewebe gelegt werden. Es werden auch Kleber in Granulatform eingesetzt, die auf die Materialien aufgestreut werden. Danach werden die Filterlagen durch Erhitzen verklebt.

Diese Verbundfilter besitzen jedoch den Nachteil, dass aufgrund des verwendeten Klebers und der vollflächigen Verklebung eine erhebliche Verringerung der Filtrationsfähigkeit des Filtermediums erfolgt, da der Kleber die offenen Poren des Filtergewebes größtenteils verschließt und somit die effektive Filtrationsfläche stark verringert. Weiterhin besitzen die verwendeten Klebernetze eine völlig ungeordnete Netzstruktur, was zu einer unregelmäßigen Verklebung führt. So besitzen einige Stellen im Filtermedium eine bessere Filtrationsfähigkeit als andere Stellen, an denen beispielsweise höhere Kleberkonzentrationen vorliegen. Dies führt im Ergebnis zu Verbundfiltern mit sehr unterschiedlichen Eigenschaften bezüglich Druckverlust, Filtrationseffizienz und Schmutzaufnahmevermögen, so dass eine Filterherstellung mit standardisierten Eigenschaften nicht möglich ist. Vielmehr kommt es bei der Herstellung zu erheblichen Qualitätsschwankungen und die Herstellung derartiger Filter ist extrem teuer.

Ein weiterer Nachteil liegt in der Beständigkeit der Klebeverbindung. Filtermedien sind erheblichen Temperaturschwankungen ausgesetzt, die im Extremfall zwischen -30 und +160°C liegen können. Die Festigkeit der Klebeverbindung wird stark beansprucht bei hohen wie bei niedrigen Temperaturen. Beispielsweise ist die Festigkeit der Klebeverbindung insbesondere bei hohen Temperaturen erheblich verringert, so dass es hier häufig zu einem teilweisen Ablösen der Filterlagen voneinander kommt.

Dies hat auch dazu geführt, dass sich Verbundfilter in diesem Bereich bisher noch nicht durchgesetzt haben, sondern vielmehr im überwiegenden Teil aller Fälle einteilig aufgebaute Filtervliese als Filtermedien verwendet werden.

Weiterhin wird im Stand der Technik versucht, durch die Plissierung des Filtermediums eine Verbesserung der Filtrierung zu erreichen. Hierbei wird sehr häufig zickzackförmig gefaltetes Filterbahnmaterial verwendet, insbesondere um die Oberfläche der Filtermedien bei möglichst geringem Raumvolumen zu vergrößern. Derartige Filter, insbesondere für Motor- und Getriebeöl, werden beispielsweise beschrieben in der DE 19735993 A1, der WO 01/45823 A1 und der DE 4227744 A1. Dabei werden zickzackgeformte Filtermedien sowohl im Ölfilter- als auch im Luftfilterbereich eingesetzt.

Die technische Aufgabe der Erfindung ist es daher, ein mehrlagiges Verbundfiltermedium zur Verfügung zu stellen, das eine ausreichende Filtrierung von feinen und groben Verschmutzungen gewährleistet, möglichst lange Standzeiten besitzt und als standardisiertes Filtermedium mit definierter Filterfläche mit einfachen Prozessen herstellbar ist. Weiterhin sollen insbesondere optimierte Eigenschaften bezüglich Druckverlust Filtrationseffizienz und Schmutzaufnahmevermögen erzielt werden, um den problemlosen Einsatz in CVT-Getrieben ohne zusätzliche Druckfiltration zu ermöglichen.

Die technische Aufgabe der Erfindung wird gelöst durch ein mehrlagiges Verbundfiltermedium zur Serienfiltration mit einer Anströmseite und einer Abströmseite bezüglich eines zu filternden Mediums, wobei das Filtermedium mindestens zwei Filterlagen aus gleichen oder verschiedenen Filtermedien umfasst und die Filterlagen über die gesamte Oberfläche an definierten Punkten und/oder Flächen miteinander verschweißt sind und mindestens ein Filtermedium auf der Anströmseite und mindestens ein Filtermedium auf der Abströmseite angeordnet ist.

Durch eine derartige Anordnung wird eine Serienfiltration erzielt, bei der zunächst im Rahmen einer Vorfiltration grobe Partikel in dem Filtervlies abgeschieden werden und anschließend die Hauptfiltration im Filtergewebe erfolgt und hierbei Schmutzpartikel eines Durchmessers von größer 10 µm entfernt werden können.

In einer bevorzugten Ausführungsform besteht das Verbundfiltermedium aus mindestens einer Filterlage Filtergewebe und mindestens einer Filterlage Filtervlies.

Weiterhin können sowohl das Filtervlies als auch die Filtergewebe bezüglich ihrer Eigenschaften entsprechend den Anforderungen des jeweiligen Getriebes gewählt werden, so dass die notwendige Reinheitsklasse für das zu filternde Medium gewährleistet ist.

In einer besonderen Ausführungsform besitzt das mehrlagige Verbundfiltermedium zwei Filterlagen, wobei eine Filterlage aus Filtergewebe besteht und eine Filterlage aus Filtervlies.

Filtervliesstoffe sind ungewebte Textilverbundstoffe, bei denen die Textilfasern durch Verschlingung, kohäsive oder adhäsive Verbindungen hergestellt werden. Filtervlies besteht üblicherweise aus Polypropylen, Polyester Polyhexamethylen-adipinamid oder Viskose, deren Zusammenhalt im allgemeinen durch die den Fasern eigene Haftung gegeben ist. Diese Filtervliese können weiterhin mechanisch verfestigt werden, beispielsweise durch Vernadeln, Vermaschen oder auch durch Verwirbeln. Besonders bevorzugt sind Polyestervliese, die bevorzugt als Kondensationsprodukt von Dimethylterephthalat und Ethylenglykol erhalten werden. Weiterhin werden diese Filtervliese mechanisch durch Vernadeln verfestigt und besitzen in bevorzugter Ausführungsform eine Beschichtung aus einem Phenolharz, das insbesondere gegen Getriebeöl oder auch Motoröl resistent ist.

Als Filtergewebe im Sinne der Erfindung werden Erzeugnisse mit gekreuzten Fäden aus Materialien wie Wolle, Baumwolle, synthetische Fasern, Kohle, Metall, Glas Asbestfasern oder auch Polymerfasern bezeichnet. Diese Filtergewebe besitzen definierte Porengrößen, die die Durchlässigkeit des Filtergewebes festlegen. In bevorzugter Ausführungsform wird als Filtergewebe ein thermoplastisches Gewebe eingesetzt, das beispielsweise bestehen kann aus Polyethylen, Polypropylen, Polyhexamethylen-adipinamid, Polyester und Mischpolymerisaten hiervon.

Die Partikelrückhaltung der verwendeten Filtervliese liegt in bevorzugter Weise bei > 60 µm, vorzugsweise > 100 µm. Die Partikeldurchlässigkeit der verwendeten thermoplastischen Filtergewebe liegt im Bereich von 10 bis 60 µm, vorzugsweise 25 bis 45 µm, besonders bevorzugt 35 bis 45 µm.

Zur Vereinfachung der Verschweißung von Filtergewebe und Filtervlies ist es bevorzugt, einen thermoplastischen Kunststoff für Filtervlies und Filtergewebe zu verwenden, das einen möglichst ähnlich gelagerten Schmelz- und Erweichungspunkt besitzt. In besonders bevorzugter Weise bestehen Filtervlies und Filtergewebe aus dem gleichen thermoplastischen Kunststoff.

Mittels der Verschweißung der Filtermedien, beispielsweise von Filtervlies und Filtergewebe wird eine definierte Verbindung an ganz bestimmten Punkten und/oder Flächen der Filteroberfläche erreicht. In bevorzugter Weise machen diese Schweißbereiche 0,5 bis 15 % der Oberfläche des Verbundfiltermediums aus. Diese können rasterförmig oder in beliebiger Anordnung auf der Oberfläche des Filtermediums verteilt sein. In einer besonders bevorzugten Ausführungsform machen die Schweißpunkte 1 bis 10 % und ganz besonders 2 bis 8 % der Oberfläche des Verbundfiltermediums aus.

Die erfindungsgemäßen mehrlagigen Verbundfiltermedien werden wie folgt hergestellt:
Die übereinander angeordneten Filterlagen werden in einen Spalt zwischen Oberwerkzeug und Unterwerkzeug eingeführt, die Filterlagen werden zwischen Oberwerkzeug und Unterwerkzeug geführt und durch Aktivierung von Energie an definierten Punkten und/oder Flächen miteinander verschweißt. Nach dem Verschweißen werden die verbundenen Filterlagen aus dem Werkzeug entnommen.
Das Verschweißen kann bevorzugt durch thermisches Erhitzen aber auch durch Ultraschallschweißen erfolgen. Die Ultraschallverschweißung ist besonders bevorzugt.

Bei der Ultraschallverschweißung werden die übereinander angeordneten Filterlagen zwischen Sonotrode und Amboss einer Ultraschweißvorrichtung angeordnet. Anschließend werden die Filterlagen zwischen Amboss und Sonotrode durch Aktivierung der Sonotrode an definierten Punkten und/oder Flächen mit Ultraschallenergie miteinander verschweißt.. Anschließend werden die verbundenen Filterlagen aus der Vorrichtung entnommen. In bevorzugter Ausführungsform liegt beim Ultraschallverschweißen die Filtergewebeseite auf der der Sonotrode zugewandten Seite.

Durch diese Herstellungsweise wird eine feste und dauerhafte Verbindung zwischen den Filtermedien gewährleistet, ohne dass zusätzliche Klebematerialien eingesetzt werden müssen. Dabei sind die Schweißkonturen durch Form und Anordnung der Schweißbereiche bestimmt. Sie sind reproduzierbar und erlauben damit die Produktion eines standardisierten Verbundfilters. Weiterhin wird eine nicht definierbare Verklebung der Filtergewebeporen wie er beispielsweise im Stand der Technik durch die verwendeten Kleber erfolgt, vermieden und es ist gewährleistet, dass die Filtrationsfunktion abgesehen von den Schweißbereichen ungehindert erfüllt werden kann.

Derartige mehrlagige Verbundfiltermedien werden in bevorzugter Weise eingesetzt als Filtermedien in Ölfiltern, Luftfiltern oder Kraftstofffiltern von Kraftfahrzeugen und ganz besonders bevorzugt in Getriebeölfiltern von Kraftfahrzeugen.

Ein weiterer Gegenstand der Erfindung ist ein Filter, enthaltend das erfindungsgemäße mehrlagige Verbundfiltermedium gemäß der Erfindung. Vorzugsweise besitzt das Filtermedium im Filter eine flache, taschenförmige oder plissierte Form.

Mit dem erfindungsgemäßen mehrlagigen Verbundfiltermedium ist es möglich, eine höhere Effizienzleistung im Saug- und Druckölbereich, insbesondere für Getriebe- und Motoranwendungen zu erreichen. Es erfolgt dabei eine Serienfiltration, wobei in bevorzugter Ausführungsform gröbere Schmutzpartikel in dem Filtervlies und feinere Schmutzpartikel in dem nachgeschalteten Filtergewebe zurückgehalten werden. Durch diesen Aufbau des Filtermediums werden die Vorteile der O-berflächenfiltration und der Tiefenfiltration kombiniert. Mit dem erfindungsgemäßen Verbundfiltermedium, das bevorzugt mittels Ultraschallverschweißen verbunden ist, erhält das Filtermedium eine besondere Schweißkontur, die ein Optimum an offener Fläche und damit an Durchflutungsfläche gewährleistet und andererseits eine dauerhafte Verbindung der Filtrationslagen sicherstellt. Weiterhin wird eine standardisierte Herstellung eines solchen Filtermediums gewährleistet und eine Herstellung mit geringen Toleranzen ermöglicht. Die so hergestellten Filtermedien besitzen auch verbesserte Eigenschaften bezüglich Druckverlust, Filtrationseffizienz und Schmutzaufnahmevermögen und können insbesondere zur Getriebeölfiltration in CVT-Getrieben eingesetzt werden, ohne dass eine zusätzliche Druckölfiltration wie bisher notwendig ist. Vielmehr wird eine einwandfreie Getriebefunktion und die Einhaltung der hierfür notwendigen Ölreinheitsklassen gewährleistet.

Die nachfolgende Figur soll die Erfindung näher erläutern:

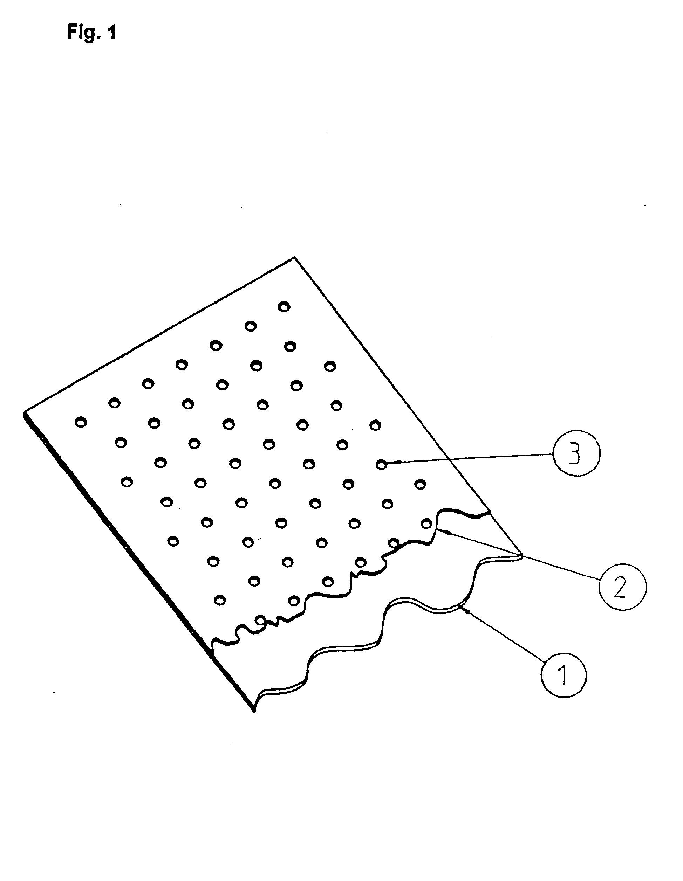

Fig.1 zeigt ein mehrlagiges Verbundfiltermedium gemäß der Erfindung. Die Ziffer 1 ist das Filtervlies, die Ziffer 3 bezeichnet das Filtergewebe und in Ziffer 2 sind die ultraschallverschweißten Konturen zu erkennen, die hier rasterförmig auf der Oberfläche des Filtermediums verteilt sind.

### Beispiele

Die nachfolgenden Beispiele sollen die Vorteile des mehrlagigen Verbundfiltermediums gemäß der Erfindung näher erläutern.

### Verwendete Materialien

Für die Versuche wurde ein chemisch verfestigtes nichtgewebtes Polyesterfiltervlies mit einem nachgeschalteten 40 µm Filtergewebe eingesetzt. Beide Materialien bestehen aus Polyester. Die Materialien wurden anschließend ultraschallverschweißt bei einer Frequenz von 20 kHz einer Amplitude von 100 %, einer Geschwindigkeit von 5 m/s und einem Abstand zwischen Sonotrode und Walze von 1,7 mm. Die Schweißpunkte wurden rasterförmig aufgebracht, so dass die Schweißpunkte 2,5 % der Oberfläche des Filtermaterials ausmachen. Es wurden anschließend die Eigenschaften des so hergestellten Verbundfiltermediums verglichen mit einem Verbundfiltermedium, das in herkömmlicher Weise mittels einem grobmaschigen Klebernetz hergestellt wurde.

### Fließtest der Filtermedien

Mittels eines Fließtestes wurde der Druckabfall eines Filters bei gewählter Durchflussrate und Temperatur bei den erfindungsgemäßen Verbundfiltermedien und laminierten Verbundfiltermedien bestimmt. Es wurden die gleichen Testfilter im gleichen Testöl und bei gleicher Durchflussrate und Temperatur einmal mit laminiertem Medium und einmal mit ultraschallverschweißtem Medium gemessen.

**Tab. 1**

| **Nr.** | **Verbindungsart** | **Durchfluss** | **Temperatur** | **Druck** |
|---|---|---|---|---|
| 1 | laminiert | 20 l/m | 24°C | 244,6 mbar |
| 2 | laminiert | 10 l/m | -4 °C | 599,6 mbar |
| 3 | verschweißt | 20 l/m | 24 °C | 153,3 mbar |
| 4 | verschweißt | 10 l/m | -4 °C | 427,9 mbar |

Beim Vergleich der Nummern 1 und 3 zeigt sich eine Reduzierung des Druckabfalls um 37% bei einer Temperatur von 24°C. Bei dem Versuch bei geringeren Temperaturen zeigt sich bei Vergleich Nr. 2 zu Vergleich Nr. 4 eine Reduzierung des Druckabfalls um 29%.

Diese Ergebnisse zeigen, dass das ultraschallverschweißte Verbundfiltermedium gegenüber dem mit Kleber laminierten Medium eine Reduzierung des Druckabfalls um ca. 30% aufweist.

Der Fließtest wurde nach ISO 3968, angepasst für Saugölfilter durchgeführt, wobei der Druckabfall über den Durchfluss dargestellt wurde.

### Aspekte der Erfindung

1. Mehrlagiges Verbundfiltermedium zur Serienfiltration mit einer Anströmseite und einer Abströmseite bezüglich eines zu filternden Mediums, wobei das Filtermedium mindestens zwei Filterlagen aus gleichen oder verschiedenen Filtermedien umfasst und die Filterlagen über die gesamte Oberfläche an definierten Punkten und/oder Flächen miteinander verschweißt sind und mindestens ein Filtermedium auf der Anströmseite und mindestens ein Filtermedium auf der Abströmseite angeordnet ist.
2. Mehrlagiges Verbundfiltermedium nach Aspekt 1, **dadurch gekennzeichnet, dass** mindestens eine Filterlage aus Filtergewebe und mindestens eine Filterlage aus Vlies besteht.
3. Mehrlagiges Verbundfiltermedium nach Aspekt 1 oder 2, **dadurch gekennzeichnet, dass** thermoplastische Filtermedien eingesetzt werden.
4. Mehrlagiges Verbundfiltermedium nach den Aspekten 1 bis 3, **dadurch gekennzeichnet, dass** die Partikelrückhaltung des Filtervlieses > 60 µm beträgt.
5. Mehrlagiges Verbundfiltermedium nach den Aspekten 1 bis 4, **dadurch gekennzeichnet, dass** die Partikelrückhaltung des Filtergewebes 10 bis 60 µm beträgt.
6. Mehrlagiges Verbundfiltermedium nach den Aspekten 1 bis 5, **dadurch gekennzeichnet, dass** Filtervlies und Filtergewebe aus dem gleichen thermoplastischem Kunststoff bestehen.
7. Mehrlagiges Verbundfiltermedium nach den Aspekten 1 bis 6, **dadurch gekennzeichnet, dass** die Schweißpunkte oder Schweißflächen 0,5 bis 15 % der Oberfläche des Verbundfiltermediums ausmachen.
8. Mehrlagiges Verbundfiltermedium nach den Aspekten 1 bis 7, **dadurch gekennzeichnet, dass** die Schweißpunkte rasterförmig auf der Oberfläche des Filtermediums angeordnet sind.
9. Verfahren zur Herstellung des Verbundfiltermediums nach den Aspekten 1 bis 8, gekennzeichnet durch die folgenden Schritte:
   a. die übereinander angeordneten Filterlagen werden in einen Spalt zwischen Oberwerkzeug und Unterwerkzeug eingeführt,
   b. die Filterlagen werden zwischen Oberwerkzeug und Unterwerkzeug geführt und durch Aktivierung von Energie an definierten Punkten und/oder Flächen miteinander verschweißt,
   c. nach dem Verschweißen werden die verbundenen Filterlagen aus dem Werkzeug entnommen.
10. Verfahren nach Aspekt 8, **dadurch gekennzeichnet, dass** das Verschweißen durch Ultraschallenergie zwischen einer Sonotrode und einem Amboss erfolgt.
11. Verfahren nach Aspekt 8, **dadurch gekennzeichnet, dass** das Verschweißen durch thermisches Erhitzen erfolgt.
12. Verfahren nach Aspekt 10, **dadurch gekennzeichnet, dass** beim Ultraschallverschweißen die Filtergewebeseite auf der der Sonotrode zugewandten Seite angeordnet ist.
13. Verwendung des Verbundfiltermediums nach den Aspekten 1 bis 8 als Filtermedium in Motorölfiltern, Getriebeölfiltern, Kraftstofffiltern oder Luftfiltern.
14. Filter enthaltend das mehrlagige Verbundfiltermedium nach den Aspekten 1 bis 8.
15. Filter nach Aspekt 14, **dadurch gekennzeichnet, dass** das Filtermedium eine flache oder taschenförmige oder plissierte Form besitzt.

### Bezugszeichenliste

- 1: Filtervlies
- 2: Filtergewebe
- 3: ultraschallverschweißte Schweißkontur

## Patentansprüche

1. Mehrlagiges Verbundfiltermedium zur Serienfiltration mit einer Anströmseite und einer Abströmseite bezüglich eines zu filternden Mediums, wobei das Filtermedium mindestens zwei Filterlagen aus gleichen oder verschiedenen Filtermedien umfasst und die Filterlagen über die gesamte Oberfläche an definierten Punkten und/oder Flächen miteinander verschweißt sind und mindestens ein Filtermedium auf der Anströmseite und mindestens ein Filtermedium auf der Abströmseite angeordnet ist und wobei Filtervlies und Filtergewebe aus dem gleichen thermoplastischen Kunststoff bestehen.

2. Mehrlagiges Verbundfiltermedium nach Anspruch 1, **dadurch gekennzeichnet, dass** mindestens eine Filterlage aus Filtergewebe und mindestens eine Filterlage aus Vlies besteht.

3. Mehrlagiges Verbundfiltermedium nach Anspruch 1 oder 2, **dadurch gekennzeichnet, dass** die Partikelrückhaltung des Filtervlieses > 60 µm beträgt.

4. Mehrlagiges Verbundfiltermedium nach Ansprüchen 1 bis 3, **dadurch gekennzeichnet, dass** die Partikelrückhaltung des Filtergewebes 10 bis 60 µm beträgt.

5. Mehrlagiges Verbundfiltermedium nach den Ansprüchen 1 bis 4, **dadurch gekennzeichnet, dass** die Schweißpunkte oder Schweißflächen 0,5 bis 15 % der Oberfläche des Verbundfiltermediums ausmachen.

6. Mehrlagiges Verbundfiltermedium nach den Ansprüchen 1 bis 5, **dadurch gekennzeichnet, dass** die Schweißpunkte rasterförmig auf der Oberfläche des Filtermediums angeordnet sind.

7. Filter enthaltend das mehrlagige Verbundfiltermedium nach den Ansprüchen 1 bis 6.

8. Filter nach Anspruch 14, **dadurch gekennzeichnet, dass** das Filtermedium eine flache oder taschenförmige oder plissierte Form besitzt.
